# EUROPEAN PATENT APPLICATION

(11) **EP 2 520 179 A1**
(43) Date of publication of application: **07.11.2012**
(21) Application number: 11164775.6
(22) Date of filing: 04.05.2011
(51) Int. Cl.: A23L 1/22, A21D 2/14, A21D 2/18, A21D 2/24, A21D 10/00

(54) **Bakery product with improved flavour properties**

(71) Applicant: Nestec S.A., 1800 Vevey (CH)
(72) Inventor: HUYNH-BA, Tuong, 1009, PULLY (CH); VITON, Florian, 1000, LAUSANNE 26 (CH); MATTHEY-DORET, Walter, 1008, PRILLY (CH)
(74) Representative: Baumgartner Harris, Pauline

(57) **Abstract**

The present invention relates to a bakery product with improved flavour properties and in particular an improved flavour shelf life. The product is prepared from a dough comprising flour, water, proline and an alkane polyol preferably wet, present in an effective amount to improve the flavour properties of said product when baked.

## Description

### Field of the invention

This invention relates to a process for improving and prolonging the shelf life of a flavour, in particular fresh baked flavour, in a bakery product such as a wafer, as well as a bakery product made by said process.

### Background of the Invention

The invention relates to baked products, in particular wafers. Wafers are baked products which are made from wafer batter and have crisp, brittle and fragile consistency. They are thin, with an overall thickness usually between < 1 and 4 mm and typical product densities range from 0.1 to 0.3 g/cm³. The surfaces are precisely formed, following the surface shape of the plates between which they were baked. They often carry a pattern on one surface or on both.

Freshly baked flavour is a key consumer preference driver in baked products. However, it suffers from staling in a very short period of time after baking, due to the disappearance of the key aroma compounds soon after baking.

US 3,547,659, assigned to Hoffman-La Roche describes the use of a composition produced by heating proline, glycine, valine, glutamine and glycerol for enhancing the flavour and aroma of bread, crackers, biscuits and the like products. The composition is characterised by a relatively high ratio of proline to glycerol, in general greater than 1 part proline to 2 parts glycerol. Also no water is added before heating the proline and glycerol mixture. Also, all the embodiments of the patent incorporate amino acids in addition to proline.

US 3,425,840 from the USA Agriculture department discloses the use of glycerol and amino acid proline to enhance fresh baked flavour in bread. Again, no water is added before heating the proline and glycerol mixture.

Although some combination of ingredients have been described as enhancing fresh baked flavour in bakery products, there is still a need to improve flavour properties in those products, in particular to extend flavour long-lastingness over time.

### Summary of the invention

We have now found that the use of an alkane polyol such as glycerol, preferably wet, and proline in specific ratios unexpectedly improves the fresh baked flavour and its long lastingness in baked applications, in particular wafers.

According to the invention we provide a bakery product prepared from a dough comprising flour, water, proline and an alkane polyol preferably wet and optional further ingredients, said proline and alkane polyol being present in an effective amount to improve the flavour properties of said bakery product when baked, said proline and alkane polyol being in a ratio of between 1:10 and 1:100, said alkane polyol being provided in an amount of from 0.1 to 20 wt% calculated on the weight of the bakery product and said proline being present in an amount of from 0.001 to 2 wt% calculated on the weight of the bakery product.

According to the invention, we further provide a process for improving the flavour properties, in particular the flavour shelf life of a baked bakery product, the process comprising combining flour, water, proline and an alkane polyol preferably wet, and optional further ingredients to make a dough and processing the resulting dough to provide a bakery product, said proline and alkane polyol being provided in a ratio of between 1:10 and 1:100, said alkane polyol being provided in an amount of from 0.1 to 20 wt% calculated on the weight of the bakery product and said proline being present in an amount of from 0.001 to 2 wt% calculated on the weight of the bakery product.

According to the invention, we also provide a bakery ingredient comprising a mixture of proline, alkane polyol and water, wherein the alkane polyol and water are present in a ratio ranging from 99:1 to 50:50, preferably from 97:3 to 70:30 and more preferably from 96:4 to 80:20, said proline and alkane polyol being in a ratio of between 1:10 and 1:100.

According to the invention we finally provide a process for generating and/or stabilising 2-acetyl-1-pyrroline (2-AP), 2-acetyl-3,4,5,6-tetrahydropyridine (2-A-3THP) and 2-acetyl-1,4,5,6-tetrahydropyridine (2-A-1THP), said process comprising adding to a bakery product, a bakery ingredient comprising a mixture of proline, alkane polyol and water, wherein the alkane polyol and water are present in a ratio ranging from 99:1 to 50:50, preferably from 97:3 to 70:30 and more preferably from 96:4 to 80:20 , said proline and alkane polyol being in a ratio of between 1: 10 to 1: 100.

### Detailed description of the invention

It has been unexpectedly found by the applicant that the presence of water together with proline and an alkane polyol, improves the flavour properties and in particular prolongs the fresh baked flavour shelf life over time in baked products. More particularly, water has been found to be an essential ingredient of the system proline/alkane polyol for the generation of key baked aroma compounds, namely 2-acetyl-1-pyrroline (2-AP), 2-acetyl-3,4,5,6-tetrahydropyridine (2-A-3THP) and 2-acetyl-1,4,5,6-tetrahydropyridine (2-A-1THP).

According to a first aspect, the invention concerns a bakery product prepared from a dough comprising flour, water, proline and an alkane polyol, and optional further ingredients, said proline and alkane polyol being present in an effective amount to improve the flavour properties of said bakery product when baked, said proline and alkane polyol being in a ratio of between 1:10 and 1:100, said alkane polyol being provided in an amount of from 0.1 to 20 wt% calculated on the weight of the bakery product and said proline being present in an amount of from 0.001 to 2 wt% calculated on the weight of the bakery product.

Preferably, the alkane polyol is wet. What is meant by wet alkane polyol is a mixture of alkane polyol and water, wherein the ratio of alkane polyol to water is between 99:1 and 50:50, preferably between 97:3 and 70:30, more preferably between 96:4 and 80:20.

The product of the invention, presents a fresh baked flavour that advantageously has an improved shelf life. As used herein, the term shelf life refers to the long-lastingness of the perceived flavour over time with limited losses of the key aroma compounds.

The term "bakery product" refers to a number of products. As used herein, it is used to mean baked goods and baking mixes, including all ready-to-eat and ready-to-bake products, flours, and mixes requiring preparation before serving. The ingredients of bakery products vary, depending on the product in question. The bakery products of the present invention comprise at least the following ingredients, namely water and flour. The bakery product may also comprise an emulsifier. The bakery products of the present invention typically will also include sugars and/or sweeteners and fat and a wide variety of natural and artificial flavourings and colorants well known in the art. Other ingredients including other nutritive substances, preservatives, anti-oxidants and fillers or yeast may also be present. Bakery products can be either baked to completion or left in a semi-baked state, after which a short period of extra time is needed for the final baking. Bakery products can also be left in unbaked state until further use. Freezing can be used to preserve an unbaked product.

The term "baked product" refers to products cooked by heat in a traditional oven or by using a microwave oven, or by any other heating or cooking process including but not limited to ohmic cooking, radio frequency cooking and extrusion cooking.

As used herein, the term dough refers to an unbaked mixture of flour, water and other ingredients, which mixture is a precursor to making a bakery product.

When the bakery product is a dough, the dough can be used to bake products into the form of breads, rolls, pretzels and other bready products and to make other more complex products such as pies, pizzas, calzones, etc.

The dough can be baked in a microwave oven, with or without a susceptor, and in thermal ovens or combination microwave or thermal ovens to form a moist, bready product having a crispy exterior crust.

Suitable bakery products include bread, pizza, bagels, patisserie, wafers, ice cream wafer cones and biscuits (cookies), as well as cakes and baked confectionery, such as brownies. Preferably, the bakery product is an edible container for a frozen confection, in particular a wafer cone.

Included within the definition of bakery products are cereal-based products e.g. expanded extruded cereals.

When the baked product is a wafer, the wafer may be a flat wafer either having geometric shapes or cartoons character shapes, as well as alphabet letters or numbers, for example. It can also be a three dimensional shaped wafer such as, for example, a cone, a glass, a dish.

The bakery product of the invention comprises proline and an alkane polyol. Suitable alkane polyols include for example glycerol, erythritol, xylitol, ribitol, sorbitol, dulcitol, mannitol, isomalt, maltitol and lactitol. Preferably, glycerol is used.

Preferably, the alkane polyol is wet with a ratio of alkane polyol to water ranging from 99:1 to 50:50, preferably from 97:3 to 70:30, more preferably from 96:4 to 80:20. According to a particular embodiment, said proline and wet glycerol are pre-reacted for a period of 5 minutes to 5 hours at a temperature of 70 to 250°C prior to combining with the flour and water to make a dough.

An especially preferred pre-reaction time is from 30 minutes to 4 hours, e.g. 2 hours.

The reaction temperature is preferably in the region of 80 - 150°C, e.g. 120°C.

The bakery product may contain additional ingredients.

According to a particular embodiment, the product contains from 5 to 30% by weight of sugars and/or sweeteners. Sugars comprise monosaccharides, disaccharides, oligosaccharides, polysaccharides including but not limited to glucose, fructose, rhamnose, sucrose, maltose, lactose, arabinose, xylose, ribose, mannose, erythrose, threose and galactose. Sweeteners include plant derived nutritive sweeteners and non-nutritive high intensity sweeteners. Preferably, the bakery product containing from 5 to 30% sugars and/or sweeteners is a wafer cone for frozen confections. Sugar plays a key role in the flexibility of rolled cones. In the still hot wafer sheet, the sugar is liquid or plastic thus giving the wafer sheet its plasticity. Upon cooling, the plasticity is lost and the wafer sheet solidifies into the shape given.

According to another embodiment, the product contains a reducing agent. What is meant by reducing agent is an agent that can reduce a test reagent, e.g., can reduce Cu2+ to Cu+, or can be oxidized by such reagents. Reducing agents include uronic acids (e.g., glucuronic acid and galacturonic acid) or Maillard reaction intermediates bearing at least one carbonyl group such as aldehydes, ketones, alpha-hydroxycarbonyl (glyceraldehyde, dihydoxyacetone) or dicarbonyl compounds.

Furthermore, sugars may have reducing properties. Reducing sugars include aldoses or ketoses. If the bakery product contains sugars as in the particular above-mentioned embodiment, those will also function as reducing agent.

The dough for the bakery product may contain a rising agent, such as yeast or sodium bicarbonate (baking soda).

The dough may also contain eggs and a source of fat, eg butter or margarine.

A wafer batter usually comprises around 40-50% flour, for example wheat flour, which itself contains approximately 70% of starch mainly occurring in the form of granules. In some batters, starch may be added in addition to the flour. The batter may also comprise at least one of the following ingredients: fat and/or oil, lecithin and/or emulsifiers, whole egg, salt, sodium bicarbonate, ammonium bicarbonate, skim milk powder, soy flour, yeast, and/or enzymes such as xylanases or proteases, for example. Any standard wafer batter may be used in accordance with the invention.

A wafer of the present invention may be prepared by any method known to the skilled person. Manufacturing wafers consists in preparing a batter containing mainly flour and water to which other minor ingredients may be added. Typically 40 to 50 % flour in batter is used in the manufacture of commercial flat wafers. In the wafer manufacture, after preparation the batter is usually cooked between two heated engraved metal plates for a determined time at a certain temperature, for instance 2 min at 160°C, to produce large flat wafer sheets with a low moisture level. After cooling, the wafers are processed according to the requirements of the final product.

In the field of frozen confectionery, wafer cones are used as an edible container for e.g. ice cream. Two principal types of conventional cones are known: moulded cones and rolled or sugar cones. Moulded cones are produced by baking the batter in a mould that determines the final shape of the cone. The finished cone is removed as a largely dry and form stable product having brittle characteristics. Rolled cones are produced by baking the batter between flat baking moulds and immediately afterwards shaping the still hot wafer sheet into its final cone shape. The batter is first dosed onto the baking base plate, then the cover baking plate is closed. During closing, the batter gets spread out between the plates into the final form of the wafer sheet. After the baking process, the plates are opened again to remove the baked wafer sheet, Right after opening the baking plates, the wafer sheet is still hot but also flexible and can be shaped without breaking into a cone shape. Shaping is done by rolling the sheets around a conical tool where the cone cools down quickly and solidifies, resulting in a largely dry and form stable product also having brittle characteristics.

When the invention relates to cereal-based products, the composition of these products may comprise an expanded starch based material, for example potato starch or an expanded cereal material, such as corn, wheat, rice, barley or oat. The expanded extruded cereal product may have a high-, low- or zero-sugar content. When making an expanded extruded cereal product a dough is formed by hydration of starch polymers. In addition to the starch based material (e.g. flour) and water, the dough may also comprise one or more of the following ingredients: soya isolate, milk powder, salt, calcium carbonate, oils and fats, such as hardened palm kernel oil, and flavourings. Any standard dough may be used in accordance with the invention. The density of expanded extruded cereal products according to the invention is preferably from 40 to 500 g/l.

An expanded extruded cereal product of the present invention may be prepared by any method known to the skilled person. For example, the moisture-resistant expanded extruded cereal product may be prepared by a process comprising the steps of making a dough by mixing at least flour and water. The dough may be fed into an extruder in which it may be further mixed and cooked. Cooking may be carried out at temperatures typically from 130 to 170°C, under 8 to 15 MPa. Under these conditions, the water in the dough is superheated whilst the dough is cooked. The cooked mixture is conveyed to the die where it is extruded through openings in the die. When the water-containing mixture, initially at high temperature and pressure, arrives at the die, water vaporises causing the extrudate to expand rapidly creating a foam structure. Traditionally, the extruded product directly expands by the instantaneous conversion of compressed liquid vapour into steam as the product flows through the die and into an ambient environment (moisture flash off process). The product is then dried to low moisture levels to stabilise it as a hard brittle structure.

The wafer or the expanded extruded cereal product of the invention can be presented to the consumer as a wafer or an expanded extruded cereal product by itself, but it can also be associated with another component to provide a composite food product. Therefore, the present invention also relates to a composite food product comprising a moisture-resistant wafer or an expanded extruded cereal product as described above in contact with another food material. The other food material may be a confectionery or savoury food product. Conventional food materials may be used and examples of suitable food materials are chocolate, jelly, compound chocolate, ice-cream, sorbet, nut paste, cream-based products, cake, mousse, nougat, caramel, praline, jam, wafer rework or a combination of these ingredients with or without inclusions of the same ingredient in a different state or of a different ingredient. For savoury products suitable food materials would include fish or meat paste, cheese-based materials or vegetable puree. Such a food product may include one or more of these other materials as fillings for the wafer or expanded extruded cereal product.

It is also possible to use the wafer or expanded extruded cereal product as the centre or part of the centre of a confectionery or savoury product. The wafer or expanded extruded cereal product may be enrobed or moulded in the coating material which can be any of the usual coatings, for example a chocolate, compound, icing, caramel or combinations of these. Preferably the food product is a confectionery product.

In a second aspect, the invention relates to a bakery ingredient comprising a mixture of proline, alkane polyol and water, wherein the alkane polyol and water are present in a ratio ranging from 99:1 to 50:50, preferably from 97:3 to 70:30, more preferably from 96:4 to 80:20, said proline and alkane polyol being in a ratio of between 1:10 and 1:100.

According to a particular embodiment, the proline and alkane polyol are pre-reacted in the water for a period of 5 minutes to 5 hours at a temperature of 70° to 250°C.

Suitable alkane polyol are those define above. Preferably, glycerol is used.

The bakery ingredient may further comprise a reducing agent as defined above, preferably in an amount of from 0.0001 to 1% calculated on the weight of proline.

According to a third aspect, the invention relates to a process for improving the flavour properties, in particular the flavour shelf life of a baked bakery product, the process comprising combining flour, water, proline and an alkane polyol, preferably glycerol, and optional further ingredients to make a dough and processing the resulting dough to provide a bakery product, said proline and alkane polyol being in a ratio of between 1: 10 to 1: 100, said alkane polyol being provided in an amount of from 0.1 to 20 wt% of the bakery product and said proline being present in an amount of from 0.001 to 2 wt% of the bakery product.

Preferably, a wet alkane polyol is used, namely alkane polyol and water wherein the ratio of alkane polyol and water is from 99:1 to 50:50, preferably from 97:3 to 70:30, more preferably from 96:4 to 80:20.

Preferably wet glycerol is used.

The processing used to convert the dough in a bakery product are those well known in the art described above.

According to a particular embodiment, the proline and wet alkane polyol are pre-reacted for a period of 5 minutes to 5 hours at a temperature of 70°C to 250°C prior to combining with the flour and water to make a dough.

Preferably, the flavour improved in the process of the invention is a fresh baked flavour. The presence of water in the process of the invention is essential, as the applicant has found that it is a necessary ingredient of the system to generate baked aroma compounds, namely 2-acetyl-1-pyrroline (2-AP), 2-acetyl-3,4,5,6-tetrahydropyridine (2-A-3THP) and 2-acetyl-1,4,5,6-tetrahydropyridine (2-A-1THP).

The invention therefore also concerns a process for generating and/or stabilising 2-acetyl-1-pyrroline (2-AP), 2-acetyl-3,4,5,6-tetrahydropyridine (2-A-3THP) and 2-acetyl-1,4,5,6-tetrahydropyridine (2-A-1THP), said process comprising adding to a bakery product, a bakery ingredient as defined above.

### Figures

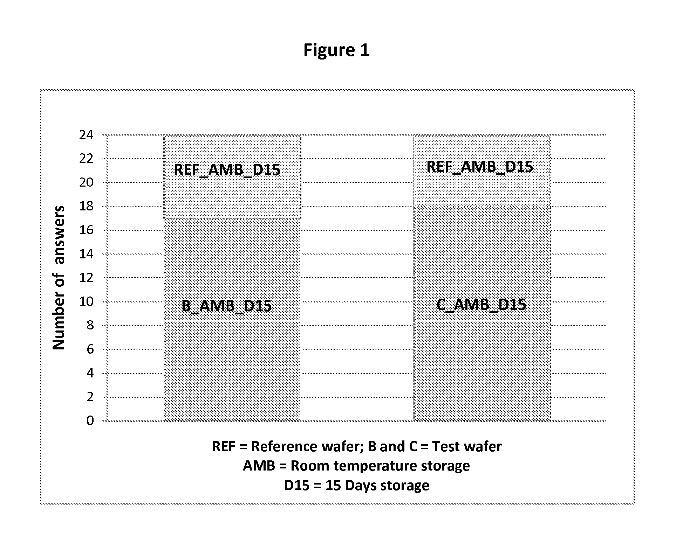

**Figure 1** represents the scores of a sensory panel evaluating the strength of the overall flavour of test wafers B and C according to the invention compared to reference wafers REF after 15 days storage (D15) at 20°C (AMB).

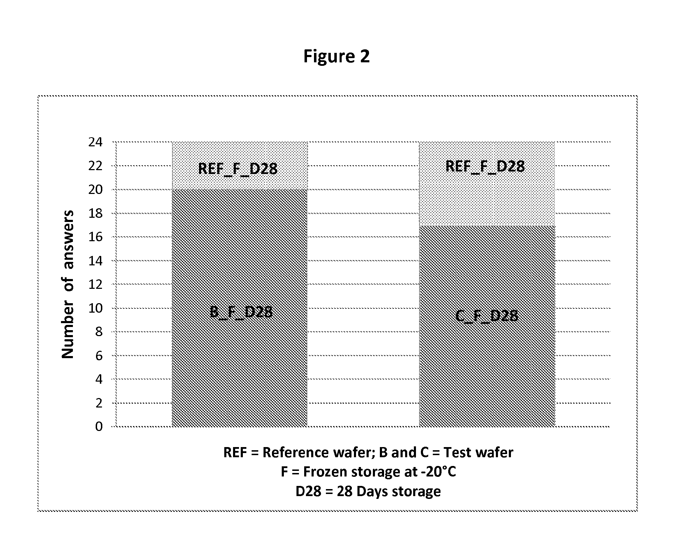

**Figure 2** represents the scores of a sensory panel evaluating the strength of the overall flavour of test wafers B and C according to the invention compared to reference wafers REF after 28 days storage (D28) at -20°C (F).

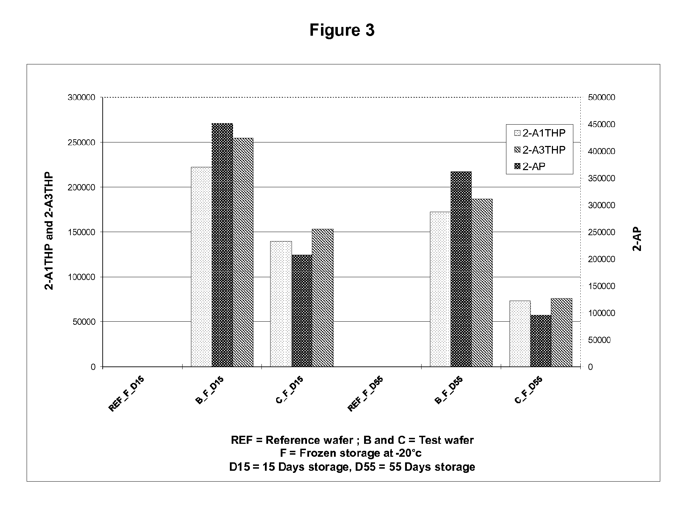

**Figure 3** shows the level of key odorants 2-acetyl-1-pyrroline (2-AP), 2-acetyl-3,4,5,6-tetrahydropyridine (2-A3THP) and 2-acetyl-1,4,5,6-tetrahydropyridine (2-A1THP) in test wafers B and C according to the invention, and reference wafers REF during storage at 20°C (AMB) for 15 and 55 days (D15 and D55, respectively).

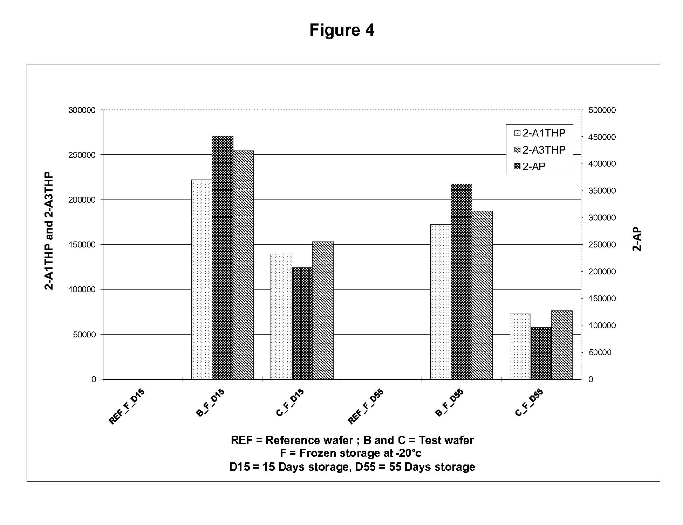

**Figure 4** shows the level of key odorants 2-acetyl-1-pyrroline (2-AP), 2-acetyl-3,4,5,6-tetrahydropyridine (2-A3THP) and 2-acetyl-1,4,5,6-tetrahydropyridine (2-A1THP) in test wafers B and C according to the invention, and reference wafers REF during storage at -20°C (F) for 15 and 55 days (D15 and D55, respectively).

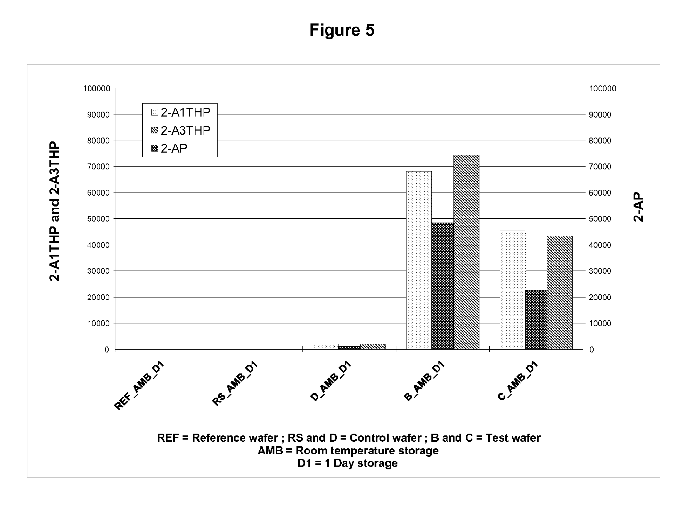

**Figure 5** shows the level of key odorants 2-acetyl-1-pyrroline (2-AP), 2-acetyl-3,4,5,6-tetrahydropyridine (2-A3THP) and 2-acetyl-1,4,5,6-tetrahydropyridine (2-A1THP) in test wafers B and C according to the invention, control wafers (D and RS) and reference wafers REF one day after baking (D1; storage at AMB).

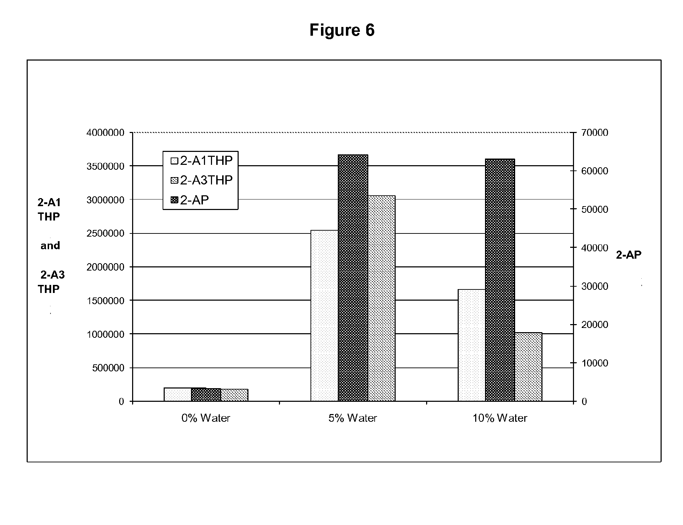

**Figure 6** shows the effect of water on the level of key odorants 2-acetyl-1-pyrroline (2-AP), 2-acetyl-3,4,5,6-tetrahydropyridine (2-A3THP) and 2-acetyl-1,4,5,6-tetrahydropyridine (2-A1THP) in pre-reacted proline/glycerol (without water; 0% H₂O) and proline/glycerol/water (with water; 5% and 10% H2O, respectively) mixtures.

The invention will now be illustrated in the following examples that should not be considered as limiting the invention.

### Examples

### Example 1: Baked wafers according to the invention

### BAKERY INGREDIENT ACCORDING TO THE INVENTION OBTAINED FROM A MIXTURE OF PROLINE/GLYCEROL/WATER

Recipe to produce 45 g: A mixture of proline (1.098 g), glycerol (37.314 g) and Vittel water (6.579 g) in a round flask was mechanically stirred for 2h at room temperature. This pre-mix was used as additional ingredient incorporated to the wafer dough prior to baking to produce test wafers C according to the invention.

### BAKERY INGREDIENT ACCORDING TO THE INVENTION OBTAINED BY PRE-REACTING A MIXTURE OF PROLINE/GLYCEROL/WATER

Recipe to produce 45 g: A mixture of proline (1.098 g), glycerol (37.314 g) and Vittel water (6.579 g) in a round flask was mechanically stirred for 2h at room temperature and then heated for 2h in an oil bath preheated at 120°C. After cooling to room temperature, the pre-reacted mixture was used as additional ingredient incorporated to the wafer dough prior to baking to produce test wafers B according to the invention.

### WAFERS PREPARATION

### Wafers recipe

A simplified recipe was as follows:

| **Ingredient** | **Percentage** |
|---|---|
| Wheat flour | 35 |
| Sugar | 11 |
| Butter | 13 |
| Vittel water | 41 |
| *Total* | *100* |

### Dough preparation

Mix wheat flour, sugar and a pinch of salt in a baker's mixer Hobart (equipped with a "fouet planétaire") during 1 min. In parallel, mix melted butter with Vittel water heated at 40°C, and the resulting mixture was slowly added during 2 min to the Hobart mixer containing the mixture of wheat flour/sugar while maintaining the mechanical mixing.

Optionally, a pre-reacted or un-reacted mixture of Proline/Glycerol/Vittel water, or alternatively proline, glycerol and Vittel water were additional ingredients incorporated during the dough preparation prior to baking.

### Wafers baking

Forty g of the final dough were poured on the wafer iron (dimension 18 x 18 cm, model Hobart, Hebenstreit machinenbau, Walldorf- Germany). The baking conditions were 180°C and 1.30 min.

### Wafers according to the invention referred to as test wafers, control wafers and reference wafers

Test, control and reference wafers were produced according to the following recipes:

**Table 1**

| **Ingredients** | **Test wafers B (Wt%)** | **Test wafers C (Wt%)** | **Control wafers D (Wt%)** | **Control wafers RS (Wt%)** | **Reference wafers REF (Wt%)** |
|---|---|---|---|---|---|
| Wheat flour | 33.25 | 33.25 | 35.02 | 33.30 | 33.25 |
| Sugar | 10.45 | 10.45 | 10.97 | 10.44 | 10.45 |
| Butter | 12.35 | 12.35 | 12.98 | 12.34 | 12.35 |
| Water | 38.95 | 38.95 | 40.91 | 43.92 | 38.95 |
| Additional ingredient | | | | | |
| Pre-reacted mixture of: | 5 | | | | |
| Un-reacted mixture of: | | 5 | 0.12 | 0 | 5 |
| *Proline* | *0.122* | *0.122* | *0.12* | *0* | *0* |
| *Glycerol* | *4.146* | *4.146* | *0* | *0* | *4.25* |
| *Vittel Water* | *0.731* | *0.731* | *0* | *0* | *0.75* |
| *Total* | *100* | *100* | *100* | *100* | *100* |

### Test wafers B

They were produced using the above-mentioned recipe with pre-reacted mixture of Proline/Glycerol/Water as additional ingredient incorporated into the dough during preparation prior to baking.

### Test wafers C

They were produced using the above-mentioned recipe with unreacted mixture of Proline/Glycerol/Water as additional ingredient incorporated into the dough during preparation prior to baking.

### Control wafers D

They were produced using the above-mentioned recipe with unreacted Proline as additional ingredient incorporated into the dough during preparation prior to baking.

### Control wafers RS (i.e. without glycerol nor proline)

They were produced using the above-mentioned recipe with no additional ingredient incorporated into the dough during preparation prior to baking.

### Reference wafers REF (i.e. with glycerol but no proline)

They were produced using the above-mentioned recipe with Glycerol/Water mixture as additional ingredient incorporated into the dough during preparation prior to baking.

### Example 2: Sensory evaluation (force choice test)

To study the effect of Proline/Glycerol/Water mixture on flavour intensity persistence during storage, test wafers B and C according to the invention and reference wafers REF were prepared as described in Example 1.

### SENSORY TEST

Paired comparison tests were performed with a sensory panel to determine if samples were significantly more odourous than the reference under storage conditions chosen.

### STORAGE CONDITIONS

The three different wafers (test wafers B and C, and reference wafers REF) were evaluated in two different storage conditions: after 15 days of storage at ambient temperature (D15; AMB) and after 28 days of storage at -20°C (D28; F).

In the sensory evaluation, each test wafer (B and C) was compared to the reference wafer REF. Test and reference wafers were similarly stored under the same time and storage conditions (e.g. wafer B, stored 15 days (D15) under ambient condition (AMB) was compared to wafer REF equally stored 15 days (D15) under ambient condition (AMB).

### EVALUATION PROTOCOL (PAIRED COMPARISON TEST)

Twenty four panellists were provided with a tray with pairs of wafers coded with 3-digits (test wafer and reference wafer). Panellists had to choose between the two wafers the one that had a stronger overall odour (forced choice test).

Following the paired comparison test question, subjects were requested to describe the sample they choose as the stronger in overall odour. This information was collected from all panellists, but was only computed for those who gave a correct answer. A correct answer is the one according to which the panellists perceived the test sample to have a stronger overall odour compared to the Reference sample.

Data were collected using Fizz software in sensory booths.

### PAIRED COMPARISON RESULTS

The results of the paired comparison test are shown in Figures 1 and 2.

For both tests wafers B and C as compared to reference wafer REF, there are significant differences at D15 under ambient storage conditions (AMB) (p<0.05) and at D28 (p<0.001) under frozen conditions (F), as shown respectively on Figures 1 and 2.

### Example 3: GC-MS / SPME analysis of the key impact odourants 2-acetyl-1-pyrroline (2-AP), 2-acetyl-3,4,5,6- and 2-acetyl-1,4,5,6-tetrahydropyridine (2-A3THP and 2-A1THP, respectively) along storage of test wafers B and C and reference wafers REF

### ANALYTICAL METHOD

### Preparation of wafer samples for volatile compounds analysis

2 g of wafer (pieces cut from the whole wafer) were placed in a 20 mL silylated glass vial and were crushed by hand with a small pestle. The glass vial was then immediately sealed using magnet iron caps with Teflon/rubber septum, and placed into the auto-sampler rack at room temperature for 60 min before the solid-phase microextraction (SPME) analysis.

### _{Headspace aroma compounds analyses by GC-MS / SPME}

This method was chosen as it is appropriate to detect the three unstable key impact odorants , i.e 2-acetyl-1-pyrroline (2-AP), 2-acetyl-3,4,5,6- and 2-acetyl-1,4,5,6-tetrahydro pyridine (2-A3THP and 2-A1THP, respectively).

The vial containing the wafer sample was transported by the auto-sampler to a Gerstel incubator for sample equilibration at 30°C for 15min without stirring. The headspace was sampled by introduction of the SPME fibre into the vial (SPME Fiber PDMS-DVB 65µm 23 gauge needle, Supelco N° 57345-U) at 30°C. After 10min adsorption, the fibre was transported into the injector port in splitless mode at 250°C for 5 min to desorb and transfer volatile compounds into the chromatographic column. After 3min the injector split ratio was increased to 50 to clean the fibre.

GC separation was performed on a HP-5MS column of 30m length, 0.25mm ID and 0.25 µm film thickness (Agilent N°19091S-433). The oven (Agilent Technologies 6890 GC oven) temperature program was: 30°C during 3min, then heated at 6°C/min until 240°C, and held for 15 min. The GC was coupled to a MS (Agilent Technologies 5973) mass selective detector operating in EI/TIC (70 eV) mode.

### GC-MS raw data processing

The amounts of 2-AP, 2-A3THP and 2-A1THP were determined by monitoring the molecular ions at MS-EI m/z 111, m/z 83 for 2-AP, MS-EI m/z 125, m/z 97 for the two 2-ATHP isomers.

### EFFECTS OF PRE-REACTED AND NON-REACTED PROLINE/GLYCEROL/WATER MIXTURES IN TEST WAFERS B AND C

To study the effects of pre-reacted and non-reacted proline/glycerol/water mixtures, test wafers B and C according to the invention and reference wafers REF were prepared as described in Example 1.

Storage tests were carried out at ambient temperature (AMB) and -20°C (F), and head-space GC-MS/SPME analyses were performed after 15 days (D15) and 55 days (D55) of storage time.

The odourants 2-AP, 2-A1THP and 2-A3THP were still detected at D15 in test wafers B and C stored at AMB and F conditions while they were not detected in reference wafers REF stored in similar conditions (see Figures 3 and 4).

After 55 days of storage either at AMB or F conditions, 2-AP, 2-A1THP and 2-A3THP were still detected in test wafers B and C, although decreased compared to D15, as shown in Figures 3 and 4.

It is worth noting that such a stability, in particular of 2-AP, is superior to what is known in the literature (R.G. Buttery & L.C. Ling. 2-Acetyl-1-pyrroline: an important aroma component of cooked rice. Chem. Ind., 1982, 23, 958-959; P. Srinivas et al. An improved process for the stabilization of 2-acetyl-1-pyrroline, the Basmati rice flavourant. Patent application WO 2004/056202, 8 July 2004; Assignee Council of Scientific and industrial research, New Delhi, IN). Actually, 2-AP was reported to decompose very rapidly and almost instantaneously at ambient temperature and in a longer time when protected from light and air in sealed vials under vacuum and stored at the temperature below -20°C. To reduce its decomposition, 2-AP needed to be diluted in organic solvent and stored at -20°C.

These results on odourants in test wafers B and C upon storage indicate that the stability of odourants, in particular of 2-AP, was much enhanced in wafers according to the invention prepared from the dough with incorporated either pre-reacted or non-reacted proline/wet glycerol system. This enhanced stability of fresh baked odourants could likely be accounted for by the encapsulation capacity of both wet glycerol and wafer structure.

### Example 4: GC-MS / SPME analysis of the key impact odourants 2-acetyl-1-pyrroline (2-AP), 2-acetyl-3,4,5,6- and 2-acetyl-1,4,5,6-tetrahydropyridine (2-A3THP and 2-A1THP, respectively) in test wafers B and C, control wafers D and RS and reference wafers REF

To study the combined vs individual effects of proline/glycerol/water mixtures (pre-reacted or non-reacted) vs proline and glycerol ingredients, test wafers B and C according to the invention, control wafers D and RS, and reference wafers REF were prepared using recipes detailed in Table 1 as described in Example 1.

Headspace GC-MS / SPME was carried out as described in Example 3 focusing on the analysis of 2-AP, 2-A1THP and 2-A3THP odourants using freshly baked control wafers D (proline as only additional ingredient) and RS (no proline nor wet glycerol added to the wafer dough) and compared with test wafers B and C according to the invention and reference wafers REF (wet glycerol as only additional ingredient).

As shown in Figure 5, 2-AP, 2-A1THP and 2-A3THP odourants were not detected in reference wafers REF and control wafers RS, respectively prepared with and without wet glycerol as additional ingredient incorporated in the wafer dough prior to baking.

In control wafers D (i.e. with proline as additional ingredient incorporated in the wafer dough prior to baking), 2-AP, 2-A1THP and 2-A3THP odourants were detected, but in much smaller amounts than in test wafers B and C. This low formation of 2-AP seemed to be in agreement with previous reported literature (P. Schieberle, W. Grosch (1991). Potent odourants of the wheat bread crumb. Z. Lebensm. Unters. Forsch., 1991, 192, 130-135).

Compared to control wafers D, test wafers B and C showed to contain much larger amounts of 2-AP, 2-A1THP and 2-A3THP (at least 20 times). Again these results indicate the high capacity of generation of 2-AP, 2-A1THP and 2-A3THP odourants using pre-reacted or non-reacted proline/glycerol/water mixtures during wafer baking.

### Example 5: GC-MS / SPME analysis of the key impact odourants 2-acetyl-1-pyrroline (2-AP), 2-acetyl-3,4,5,6- and 2-acetyl-1,4,5,6-tetrahydropyridine (2-A3THP and 2-A1THP, respectively) in pre-reacted proline/glycerol mixtures containing varying amounts of water

The effect of water on the generation of the key impact odorants 2-AP, 2-A3THP and 2-A1THP was studied in pre-reacting proline with wet glycerol containing respectively 0%, 5% and 10% water.

Recipe to produce 45 g: In a round flask, a mixture of proline (1.098 g) and glycerol (43.902 g) containing respectively 0%, 5% and 10% Vittel water was mechanically stirred for 2h at room temperature, and then heated for 2h in an oil bath preheated at 120°C.

### ANALYTICAL METHOD

The same method as described in Example 3 was used to analyse the level of 2-AP, 2-A3THP and 2-A1THP in the 3 heated mixtures of proline/glycerol/water.

### RESULTS

As shown in Figure 6, the level of key odourants 2-AP, 2-A1THP and 2-A3THP is largely influenced by the percentage of water in the mixture proline/glycerol/water.

### Summary of the example results

The system proline/ glycerol/water, which showed to favour the generation and stability of "fresh baked" flavour notes was evaluated for its impact on fresh baked flavour of model wafers.

Sensory evaluations and analytical results focusing on 2-AP, 2-A1THP and 2-A3THP (known intrinsically unstable key aroma volatiles compounds imparting baked, pop-corn and bread-crust flavour notes) indicate that incorporation of a mixture of proline and wet glycerol, either pre-reacted or not, into the wafer dough prior to baking improves and preserves the fresh baked flavour, and efficiently generates and stabilizes 2-AP, 2-A1THP and 2-A3THP upon wafer baking and storage.

The above examples are illustrative of the products and methods of making the same falling within the scope of the present invention. They are not to be considered in any way limitative of the invention. Changes and modifications can be made with respect to the invention. That is, the skilled person will recognise many possible variations in these examples covering a wide range of compositions, ingredients, processing methods, and mixtures, and can adjust the naturally occurring levels of the compounds of the invention for a variety of applications.

## Claims

1. A bakery product prepared from a dough comprising flour, water, proline and an alkane polyol, preferably glycerol and optional further ingredients, said proline and alkane polyol being present in an effective amount to improve the flavour properties of said bakery product when baked, said proline and alkane polyol being in a ratio of between 1:10 and 1:100, said alkane polyol being provided in an amount of from 0.1 to 20 wt% calculated on the weight of the bakery product and said proline being present in an amount of from 0.001 to 2 wt% calculated on the weight of the bakery product.

2. A bakery product according to claim 1, wherein the alkane polyol is wet.

3. A bakery product according to claim 2, wherein the wet alkane polyol consists in alkane polyol and water in a ratio ranging from 99:1 to 50:50, preferably from 97:3 to 70:30, more preferably from 96:4 to 80:20.

4. A bakery product according to claim 2 or 3, wherein said proline and wet alkane polyol are pre-reacted for a period of 5 minutes to 5 hours at a temperature of 70 to 250°C prior to combining with the flour and the water to make a dough.

5. A bakery product according to any one of claim 1 to 4, which comprises from 5 to 30% by weight of sugars and/or sweeteners.

6. A bakery product according to claim 5 which is a cone wafer for frozen confection.

7. A bakery product according to any one of the preceding claims, which comprises a reducing agent.

8. A bakery ingredient comprising a mixture of proline, alkane polyol and water, wherein the alkane polyol and water are present in a ratio ranging from 99:1 to 50:50, preferably from 97:3 to 70:30, more preferably from 96:4 to 80:20 and wherein said proline and alkane polyol are in a ratio of between 1:10 and 1:100.

9. A bakery ingredient according to claim 8, wherein the proline and alkane polyol, preferably glycerol are pre-reacted in water for a period of 5 minutes to 5 hours at a temperature of 70 to 250°C.

10. A bakery ingredient according to claim 8 or 9, which further comprises a reducing agent preferably in an amount of 0.0001 to 1% calculated on the weight of proline.

11. A process for improving the flavour and/or flavour shelf-life of a baked bakery product, the process comprising combining flour, water, proline and an alkane polyol, preferably glycerol, and optional further ingredients to make a dough and processing the resulting dough to provide a bakery product, said proline and alkane polyol being in a ratio of between 1:10 and 1:100, said alkane polyol being provided in an amount of from 0.1 to 20 wt% calculated on the weight of the bakery product and said proline being present in an amount of from 0.001 to 2 wt% calculated on the weight of the bakery product.

12. A process according to claim 11, wherein the alkane polyol is wet and the ratio of alkane polyol to water is from 99:1 to 50:50, preferably from 97:3 to 70:30, more preferably from 96:4 to 80:20.

13. A process according to claim 12, wherein said proline and alkane polyol are pre-reacted in water for a period of 5 minutes to 5 hours at a temperature of 70 to 250°C prior to combining with the flour and water to make a dough.

14. A process according to any one of claims 11 to 13, wherein the flavour is a fresh baked flavour.

15. A process for generating and/or stabilising 2-acetyl-1-pyrroline (2-AP), 2-acetyl-3,4,5,6-tetrahydropyridine (2-A-3THP) and 2-acetyl-1,4,5,6-tetrahydropyridine (2-A-1THP), the process comprising adding a bakery ingredient according to any one of claims 8 to 10 in a food product.
